# DEMANDE DE BREVET EUROPEEN

(11) **EP 0 984 220 A1**
(43) Date de publication de la demande: **08.03.2000**
(21) Numéro de dépôt: 99401793.7
(22) Date de dépôt: 16.07.1999
(51) Int. Cl.: F21S 8/10, B60Q 1/26

(54) **Système de signalisation multi-fonction ayant un voyant éclairé uniformément**

(30) Priorité: 03.09.1998 FR 9811062
(71) Demandeur: VALEO VISION, 93012 Bobigny Cédex (FR)
(72) Inventeur: Dera, Jean, 75017 Paris (FR)
(74) Mandataire: Lemaire, Marc

(57) **Abrégé**

L'invention concerne un système de signalisation multi-fonction. Il comporte au moins une première fonction lumineuse, de haute intensité relative (F₁), et une deuxième fonction lumineuse, de basse intensité relative (F₂). Chaque fonction lumineuse comporte une surface d'éclairement (24₁, 24₂) dans laquelle sont situées des sources lumineuses.

Chaque fonction lumineuse comporte aussi une surface de collimation (8₁, 8₂). L'espacement (e₂) entre la surface d'éclairement (24₂) et la surface de collimation (8₂) de la deuxième fonction lumineuse (F₂) est plus grand que l'espacement (e₁) entre la surface d'éclairement (24₁) et la surface de collimation (8₁) de la première fonction lumineuse (F₁).

## Description

L'invention concerne un système de signalisation multi-fonction, et plus particulièrement un système comportant au moins une première fonction lumineuse, de haute intensité relative, et une deuxième fonction lumineuse, de basse intensité relative, chaque fonction lumineuse comportant une surface d'éclairement dans laquelle sont situées une pluralité de sources lumineuses, chaque source lumineuse émettant un faisceau lumineux dans un angle solide d'émission ; une surface de collimation dans laquelle sont situés des dispositifs de collimation en nombre égal à celui des sources lumineuses de la surface d'éclairement, chaque dispositif de collimation étant associé à une source lumineuse; la surface d'éclairement et la surface de collimation étant séparées l'une de l'autre par un espacement sensiblement constant ; chaque dispositif de collimation ayant une surface conçue de manière à capter sensiblement la totalité du flux lumineux émis par la source lumineuse qui lui est associée; un voyant sur lequel les dispositifs de collimation projettent le flux lumineux reçu.

Les systèmes multi-fonction regroupent plusieurs fonctions différentes au sein d'un même boîtier, comme les feux de stop, les feux de position, les feux clignotants ou les feux antibrouillard. La législation en vigueur impose un flux lumineux qui diffère d'une fonction à l'autre. Par exemple, les feux de stop doivent émettre un éclairage plus intense que les feux de position.

Les diodes des différentes fonctions sont de préférence toutes identiques, notamment pour limiter le nombre de références en production. Elles émettent par conséquent des flux lumineux égaux. La différence de flux lumineux d'une fonction par rapport à une autre est donc généralement obtenue en jouant sur le nombre de diodes implantées dans chaque fonction. Elles sont moins nombreuses dans les fonctions pour lesquelles le flux lumineux requis est moins intense.

Cependant, ceci à pour conséquence que les diodes sont plus espacées dans les fonctions lumineuses de moindre intensité relative. Par suite, les faisceaux lumineux projetés sur le voyant de diffusion sont espacés les uns des autres et apparaissant à l'oeil comme distincts. La surface éclairante n'est plus homogène.

L'invention a pour objet un système de signalisation multi-fonction à sources lumineuses quasi-ponctuelles qui remédie à cet inconvénient en assurant un éclairage homogène de la surface du voyant, particulièrement pour les fonctions lumineuses de moindre intensité.

Ce résultat est obtenu par le fait que l'espacement entre la surface d'éclairement et la surface de collimation de la deuxième fonction lumineuse est plus grand que l'espacement entre la surface d'éclairement et la surface de collimation de la première fonction lumineuse.

De préférence, l'espacement entre la surface d'éclairement et la surface de collimation de chaque fonction lumineuse est choisi suffisamment grand pour que la surface du voyant apparaisse comme uniformément éclairée.

Généralement, les sources lumineuses sont réparties dans chaque fonction selon un pas d'espacement régulier et on peut alors choisir l'espacement entre la surface d'éclairement et la surface de collimation de telle sorte qu'il soit sensiblement proportionnel au pas d'espacement des sources lumineuses.

Selon une autre méthode, on choisit cet espacement de telle sorte qu'il soit inversement proportionnel à la racine carrée du flux lumineux émis par unité de surface de la surface de collimation.

Dans une réalisation avantageuse, la surface de collimation de la première fonction lumineuse et la surface de collimation de la deuxième fonction lumineuse se raccordent dans un plan.

D'autres caractéristiques et avantages de la présente invention apparaîtront à la lecture de la description qui suit d'un exemple de réalisation de l'invention faite en référence aux figures annexées. Sur ces figures :
- la figure 1 est une vue de détail en perspective d'une source lumineuse et de son faisceau lumineux;
- les figures 2 et 3 représentent respectivement une vue en coupe et une vue de dessus d'un système de signalisation multi-fonction conforme à l'art antérieur;
- les figures 4 et 5 représentent respectivement une vue en coupe et une vue de dessus d'un mode préféré de réalisation d'un système de signalisation multi-fonction conforme à l'invention.

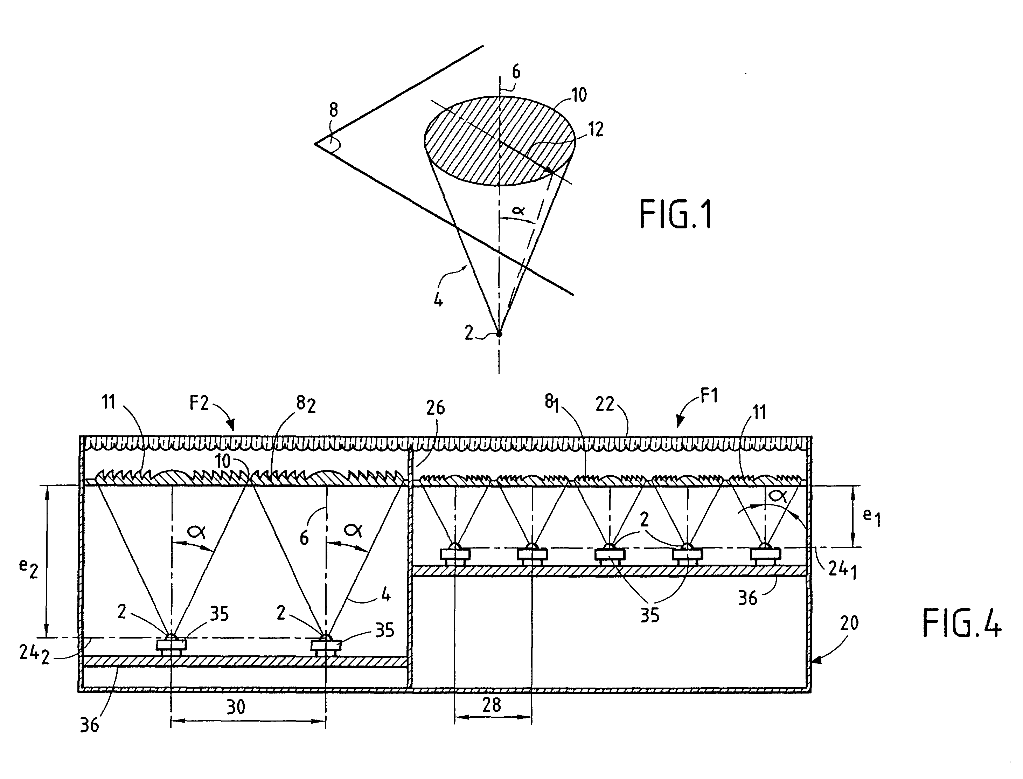

Sur la figure 1, la référence 2 désigne une source de lumière quasi-ponctuelle telle que par exemple une diode électroluminescente (DEL). Cette source émet un flux lumineux en forme de cône 4 d'axe 6, et de demi-angle au centre a. Dans le cas d'une source telle qu'une diode, cet angle est d'environ 50°. La référence 8 désigne un plan perpendiculaire à l'axe 6 du cône 4. Le flux lumineux émis par la diode électroluminescente coupe ce plan, appelé dans la suite du texte "surface de collimation", selon un cercle 10 centré sur l'axe 6. La surface du cercle est éclairée par la source lumineuse, tandis que la surface extérieure au cercle ne l'est pas.

Le rayon 12 du cercle éclairé 10 est proportionnel à l'espacement e de la source lumineuse 2 et du plan 8. Par conséquent, plus la source lumineuse 2 est éloignée du plan, plus elle éclaire une surface importante du plan 8. Bien que, sur la figure 1, la surface de collimation ait été représentée par un plan, cette surface peut avoir une autre forme, par exemple courbe. C'est pour cette raison qu'on la désigne par "surface de collimation", et non par "plan de collimation".

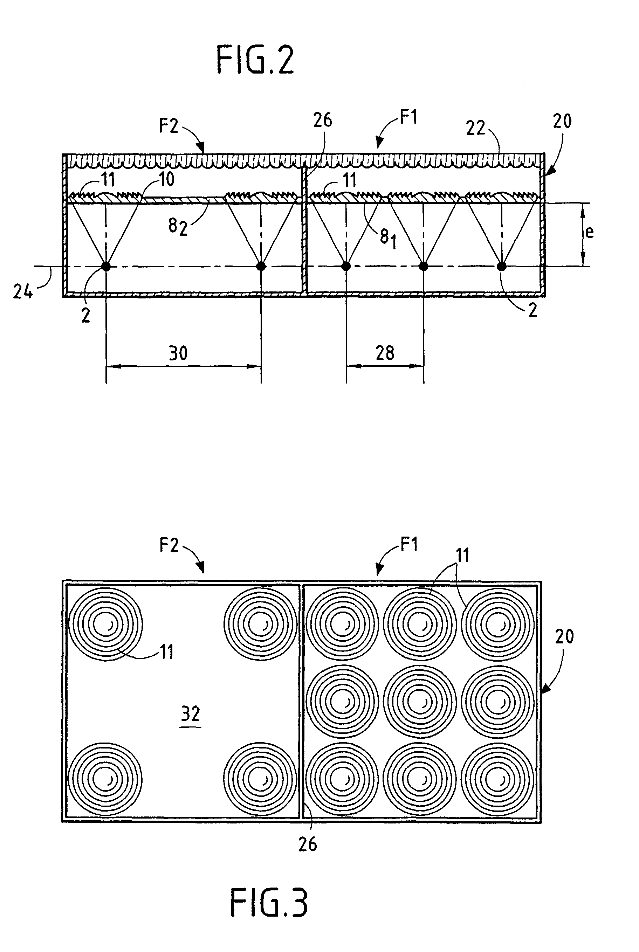

On a représenté sur les figures 2 et 3 une vue en coupe et une vue de dessus d'un système de signalisation multi-fonction conforme à l'art antérieur. Par souci de simplification l'exemple représenté ne comporte que deux fonctions, mais il va de soi qu'il pourrait en comporter davantage, quatre par exemple.

Le système comprend un socle 20 définissant avec un voyant 22 une cavité intérieure peu profonde et de hauteur sensiblement constante. Le socle et le voyant peuvent être galbés de manière à épouser la région de coin arrière d'un véhicule. Dans ce cas, la surface de collimation et la surface d'éclairement sont courbes. A l'intérieur du socle on trouve une surface d'éclairement 24 (non matérialisé), dans laquelle sont situées des diodes réparties selon un pas régulier, et une surface de collimation 8. Comme on l'a expliqué en référence à la figure 1, le cône lumineux émis par chacune des diodes électroluminescentes coupe le plan de collimation selon un cercle 10. Un dispositif de collimation 11, généralement une lentille de Fresnel, est associé à chaque source lumineuse. Il recouvre sensiblement la surface du cercle 10 de manière à recevoir la totalité du flux lumineux émis. Le dispositif de collimation 11 possède un foyer situé à une distance focale finie égale à l'espacement e entre la surface d'éclairement 24 et la surface de collimation 8. Chaque dispositif de collimation est placé de telle manière que chaque source se trouve au foyer du dispositif de collimation qui lui est associé. Ainsi chaque dispositif de collimation renvoie un faisceau parallèle sur le voyant 22. Ce dernier comporte des dispositifs de diffusion du faisceau tels que des billes sur sa face intérieure, ou des dispositifs permettant de diffracter la lumière tel qu'un dispositif holographique.

Deux fonctions lumineuses sont aménagées dans le socle 20, à savoir une première fonction lumineuse F₁ située à droite (selon la figure 1) d'une cloison de séparation optique 26, et une deuxième fonction lumineuse F₂, située à gauche de la cloison 26. La première fonction lumineuse, par exemple la fonction de stop, émet une intensité lumineuse plus importante que la deuxième fonction lumineuse, par exemple la fonction de feu de position. Cette intensité lumineuse plus importante est obtenue par un nombre de diodes plus élevé par unité de surface. C'est pourquoi dans la fonction F₁, les diodes électroluminescentes sont réparties dans la surface d'éclairement 24 avec un pas d'espacement 28 plus petit que le pas d'espacement 30 des diodes électroluminescentes dans la fonction F₂.

La figure 3 représente une vue de dessus du système de signalisation de la figure 2. Etant donné que l'espacement e est égal dans les deux fonctions, les cercles 10 éclairés par les diodes électroluminescentes, et par suite les dispositifs de collimation 11, ont le même diamètre. Dans la fonction F₁, les cercles 10 sont pratiquement tangents les uns aux autres, exception faite d'une faible zone intermédiaire. De ce fait, la surface du voyant qui couvre la fonction F₁ apparaît éclairée de manière homogène.

Au contraire, dans fonction F₂, où les diodes électroluminescentes sont beaucoup plus espacées que dans la fonction F₁, il existe un espace non éclairé 32 important entre deux dispositifs de collimation 11 voisins. Ces cercles sont trop espacés pour se fondre en une zone homogène, et ils apparaissent distincts aux yeux d'un observateur.

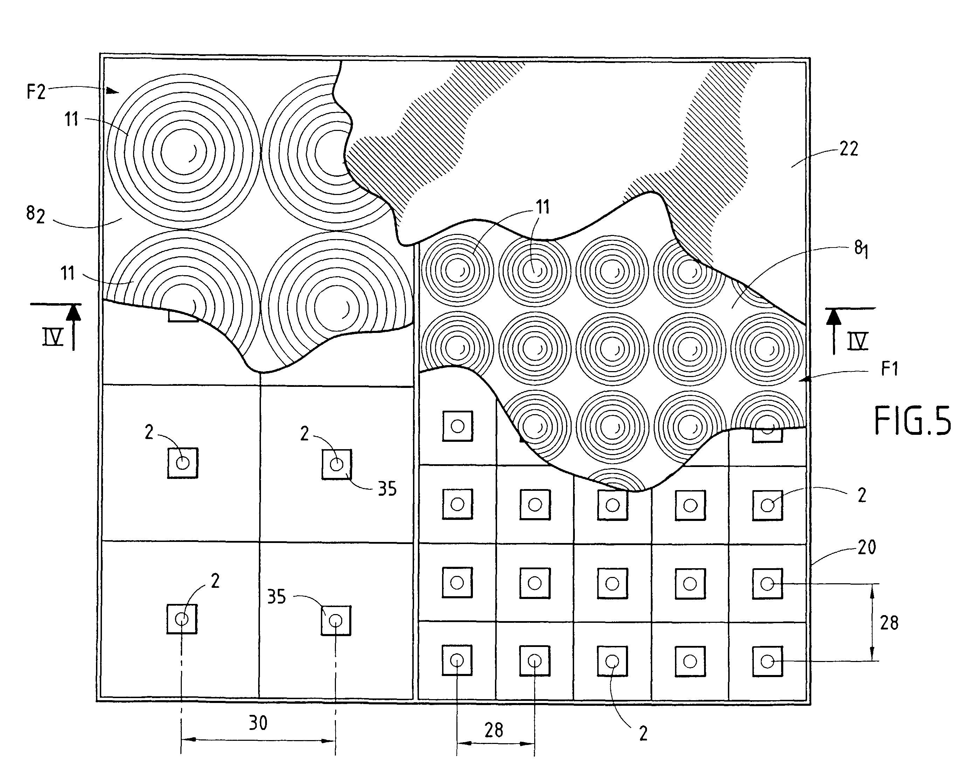

On a représenté sur les figures 4 et 5 une vue en coupe et une vue de dessus d'un système de signalisation multi-fonction conforme à l'invention. Par souci de simplification, l'exemple de réalisation décrit ne comporte que deux fonctions, mais pourrait en comporter davantage, classiquement quatre, ou plus.

De la même manière que l'art antérieur, le système de l'invention comporte un socle 20 séparé en deux parties par une cloison 26, une première fonction F₁ se trouvant à droite de la cloison 26, selon la figure 4, et une deuxième fonction F₂ se trouvant à gauche de cette même cloison. De la même manière chaque fonction est constituée d'une surface d'éclairement, dans laquelle des sources lumineuses quasi-ponctuelles, par exemple des diodes électroluminescentes, sont réparties régulièrement, et d'une surface de collimation sur laquelle sont formés des dispositifs de collimation qui reçoivent le flux lumineux des diodes électroluminescentes et le transforment en un faisceau parallèle dirigé perpendiculairement au voyant 22. On note également que, comme dans le cas de l'art antérieur, la première fonction lumineuse doit émettre une intensité lumineuse plus importante que la deuxième fonction lumineuse et donc comporte un nombre de diodes plus élevé par unité de surface. C'est pourquoi dans la fonction F₁, les diodes électroluminescentes sont réparties avec un pas d'espacement 28 plus petit que le pas d'espacement 30 des diodes électroluminescentes dans la fonction F₂.

On rappelle que les diodes électroluminescentes utilisées dans les deux fonctions sont toutes identiques.

On a représenté sur la figure 5 une vue de dessus du système de la figure 4. En haut et à droite, on a représenté une partie de la surface du voyant 22. En dessus du voyant, on trouve les surfaces de collimation 8₁ et 8₂ des fonctions F₁ et F₂ respectivement, avec les lentilles de Fresnel qui recouvrent la surface des cercles 10. Encore en dessous, on trouve les diodes électroluminescentes. Elles possèdent un corps carré 35 surmonté d'une partie d'émission de lumière. Ce sont ces parties qui forment les sources quasi-ponctuelles 2 proprement dites et qui se trouvent respectivement dans les surfaces d'éclairement 24₁ et 24₂. Elles sont situées au foyer des dispositifs de collimation 11. Les corps carrés comportent des pattes de connexion qui permettent de les souder sur un ou des circuits imprimés 36, ou encore sur tout autre composant réalisant la connexion électrique des DELs, comme des circuits métalliques ou des circuits souples.

L'espacement e₁ entre la surface d'éclairement 24₁ et la surface de collimation 8₁ dans la fonction F₁ n'est pas égal à l'espacement e₂ entre la surface d'éclairement 24₂ et la surface de collimation 8₂ dans la fonction F₂. En effet, l'espacement e₂ est significativement plus grand que l'espacement e₁ de la surface d'éclairement et de la surface de collimation de la première fonction lumineuse. De ce fait, les cercles éclairés 10 formés sur la surface de collimation 8₂ sont plus grands que les cercles éclairés formés sur la surface de collimation 8₁. Si l'on espace suffisamment les deux surfaces 24₁ et 8₂, on peut obtenir que ces cercles soient pratiquement tangents, de la même manière que les cercles de la surface de collimation 8₁, un faible espacement subsistant seulement entre eux. Ainsi, la surface du voyant apparaîtra comme éclairée uniformément.

Pour obtenir un tel résultat, il suffit que l'espacement entre la surface d'éclairement et la surface de collimation soit approximativement proportionnel au pas d'espacement des sources lumineuses 2. Par exemple, si le pas des diodes électroluminescentes est trois fois plus petit dans la fonction F1, l'espacement e₂ devra être trois fois supérieur à l'espacement e₁.

Selon une autre méthode, on peut également choisir l'espacement e entre la surface d'éclairement et la surface de collimation tel qu'il soit inversement proportionnel à la racine carrée du flux lumineux émis par unité de surface de la surface de collimation.

Dans l'exemple représenté, le pas d'espacement des diodes dans la fonction F₁ est de 15 mm, pour une distance focale des Fresnels de 7 mm. Dans la fonction F₂ le pas d'espacement de diodes est de 30 mm pour une distance focale des Fresnels de 33 mm. On pourrait également avoir des pas d'espacement et horizontaux différents. Ceci est le cas notamment lorsque les diodes sont disposées en quinconce afin de les rapprocher davantage l'une de l'autre. Ainsi, selon une autre réalisation, le pas horizontal est de 15 mm et le pas vertical de 12,5 mm.

On a représenté sur les figures 4 et 5 un mode préféré de réalisation dans lequel les surfaces de collimation 8₁ et 8₂ sont dans un même plan (cas de surfaces planes), ou se raccordent dans un même plan (cas de surfaces non planes). Ce mode de réalisation est avantageux, d'une part, parce que les surfaces de collimation peuvent alors être réalisées d'une seule pièce, d'autre part, parce qu'on assure ainsi une bonne homogénéité d'aspect entre les deux fonctions. Toutefois il va de soi que cette caractéristique n'est pas impérative et que les surfaces 8₁ et 8₂ pourraient être décalées l'une par rapport à l'autre sans que le fonctionnement de l'invention soit modifié.

## Revendications

1. Système de signalisation comportant au moins une première fonction lumineuse, de haute intensité relative (F₁), et une deuxième fonction lumineuse, de basse intensité relative (F₂), chaque fonction lumineuse comportant :
- une surface d'éclairement (24₁, 24₂) dans laquelle sont situées une pluralité de sources lumineuses (2), chaque source lumineuse (2) émettant un faisceau lumineux dans un angle solide d'émission,
- une surface de collimation (8₁, 8₂) dans laquelle sont situés des dispositifs de collimation 11 en nombre égal à celui des sources lumineuses (2) de la surface d'éclairement (24₁, 24₂), chaque dispositif de collimation 11 étant associé à une source lumineuse; la surface d'éclairement (24₁, 24₂) et la surface de collimation (8₁, 8₂) étant séparées l'une de l'autre par un espacement (e) sensiblement constant ; chaque dispositif de collimation 11 ayant une surface conçue de manière à capter sensiblement la totalité du flux lumineux émis par la source lumineuse (2) qui lui est associée ;
- un voyant (22) sur lequel les dispositifs de collimation 11 projettent le flux lumineux reçu,
caractérisé en ce que l'espacement (e₂) entre la surface d'éclairement (24₂) et la surface de collimation (8₂) de la deuxième fonction lumineuse (F₂) est plus grand que l'espacement (e₁) entre la surface d'éclairement (24₁) et la surface de collimation (8₁) de la première fonction lumineuse (F₁).

2. Système selon la revendication 1 caractérisé en ce que l'espacement (e) de la surface d'éclairement (24₁, 24₂) et de la surface de collimation (8₁, 8₂) de chaque fonction lumineuse (F₁, F₂) est choisi suffisamment grand pour que la surface du voyant (22) apparaisse comme uniformément éclairée.

3. Système selon la revendication 2 caractérisé en ce que les sources lumineuses (2) sont réparties dans chaque fonction selon un pas d'espacement régulier et en ce que l'espacement (e) de la surface d'éclairement (24₁, 24₂) et de la surface de collimation (8₁, 8₂) est sensiblement proportionnel au pas d'espacement des sources lumineuses (2).

4. Système selon la revendication 2 caractérisé en ce que l'espacement (e) de la surface d'éclairement (24₁, 24₂) et de la surface de collimation (8₁, 8₂) est inversement proportionnel à la racine carrée du flux lumineux émis par unité de surface de la surface de collimation (8₁, 8₂).

5. Système selon l'une quelconque des revendications 1 à 4 caractérisé en ce que la surface de collimation (8₁) de la première fonction lumineuse et la surface de collimation (8₂) de la deuxième fonction lumineuse se raccordent dans un plan.

6. Système selon l'une quelconque des revendications 1 à 5 caractérisé en ce que les dispositifs de collimation 11 sont des lentilles de Fresnel.

7. Système selon l'une quelconque des revendications 1 à 6 caractérisé en ce que les sources lumineuses (2) sont des diodes électroluminescentes.
